# EUROPÄISCHE PATENTSCHRIFT

(11) **EP 0 839 434 B1**
(45) Veröffentlichungstag und Bekanntmachung des Hinweises auf die Patenterteilung: **20.09.2000**
(21) Anmeldenummer: 96923842.7
(22) Anmeldetag: 12.07.1996
(51) Int. Cl.: H04Q 11/04

(54) **VERFAHREN ZUR ÜBERTRAGUNG VON ATM-DIGITALSIGNALEN EINER PROGRAMMEINHEIT, INSBESONDERE VON DIGITALEN DATENKOMPRIMIERTEN VIDEO-VERTEILSIGNALEN**
METHOD OF TRANSMITTING ATM DIGITAL PROGRAMME UNIT SIGNALS, IN PARTICULAR DIGITAL DATA-COMPRESSED VIDEO DISTRIBUTION SIGNALS
PROCEDE DE TRANSMISSION DE SIGNAUX NUMERIQUES MTA D'UNE UNITE DE PROGRAMME, EN PARTICULIER DE SIGNAUX DE REPARTITION VIDEO NUMERIQUES A DONNEES COMPRIMEES

(30) Priorität: 18.07.1995 DE 19526172
(43) Veröffentlichungstag der Anmeldung: 06.05.1998
(73) Patentinhaber: SIEMENS AKTIENGESELLSCHAFT, 80333 München (DE)
(72) Erfinder: MÖHRMANN, Karl, Heinz, D-81369 München (DE)
(86) Internationale Anmeldenummer: DE9601276
(87) Internationale Veröffentlichungsnummer: WO9704583

(56) Entgegenhaltungen:
- WO-A-93/15571
- FIBER NETWORKS FOR VOICE, VIDEO & MULTIMEDIA SERVICES, Bd. 1786, 19.November 1992, BOSTON MA, Seiten 48-57, XP002022605 G VAN DER PLAS ET AL.: "ATM over passive optical networks: system design and demonstration"

## Beschreibung

In Faser-/Koaxial-Teilnehmeranschlußnetzen ist insbesondere bei in Form von ATM-Signalen übertragenen digitalen datenkomprimierten Videosignalen die Verfügbarkeit eines stabilen Taktsignals auf der Empfangsseite für das einwandfreie Funktionieren des empfangsseitigen Decoders unabdingbar: In einem ATM-System geht die Signalübertragung grundsätzlich asynchron vor sich, d.h. die einzelnen ATM-Zellen treffen zwar in der richtigen Reihenfolge, aber in ungleichmäßigen Zeitabständen im Empfänger ein. Die Wiedergewinnung eines hinreichend stabilen Empfangstaktes ist dabei zwar prinzipiell möglich, etwa durch Einsatz eines großen Pufferspeichers zur Glättung des Datenstroms (mit der Folge unerwünschter Signalverzögerung), durch Mitübertragung von regelmäßig eingeblendeten Zeitmarken u.a.; solche Maßnahmen sind aber aufwendig und teuer. Für die Akzeptanz eines Systems ist indessen eine kostenoptimierte Lösung speziell bei Teilnehmereinrichtungen von großer Bedeutung.

Man kann zur empfangsseitigen Taktversorgung zu von einer Digitalsignalquelle, insbesondere TV-Signal-Quelle, über eine Verbindungseinrichtung (Connection Unit) und ein daran angeschlossenes, jeweils einer Mehrzahl von teilnehmerseitigen Netzabschlußeinheiten gemeinsames Lichtwellenleiter- und/oder Koaxialleitungs-Baumnetz zu den teilnehmerseitigen Netzabschlußeinheiten in Form von ATM-Signalen übertragenen Digitalsignalen, insbesondere digitalen datenkomprimierten TV-Verteilsignalen, in der Weise verfahren, daß der (die) benötigte(n) Signaltak(e) ebenfalls von der Verbindungseinrichtung als Kopfstelle aus gesondert zu allen an das Lichtwellenleiter- u./o. Koaxialleiter-Baumnetz angeschlossenen Netzabschlußeinheiten übertragen wird (werden), wo damit das aus den empfangenen ATM-Zellen gewonnene digitale Signal zeitregeneriert wird (EP-A-0 673 166, Veröffentlichungstag 20.09.95). Dieses Verfahren bringt den Vorteil mit sich, daß die Signaltakte von der(Video-)Signalquelle bis zur Kopfstelle (Verbindungseinrichtung, Connection Unit) auch in einer Weise (z.B. mittels eingeblendeter Zeitmarken in Form von bestimmten ATM-Zellen) übertragen werden können, die mit einem höheren Aufwand für die Übertragung bzw. Wiedergewinnung eines stabilen Taktsignals verbunden sein kann, da dies für alle über die Verbindungseinheit an die betreffende (Video-)Signalquelle angeschlossenen Teilnehmer gemeinsam geschehen kann, wogegen der teilnehmerindividuell zu treibende Aufwand für die Taktwiedergewinnung relativ niedrig gehalten werden kann.

Der genannte höhere Aufwand wird dabei eher dann tragbar sein, wenn Signaltakte nur einer oder weniger, tunlichst in der Nähe der Kopfstelle (Verbindungseinrichtung, Connection Unit) situierter (Video-)Signalquellen zu übertragen und wiederzugewinnen sind. Sind dagegen viele (Video-)Signalquellen gleichzeitig einzubeziehen und/oder liegen zwischen (Video-) Signalquellen und Kopfstelle (Verbindungseinrichtung, Connection Unit) größere Entfernungen und ggf. Telekomverwaltungsgrenzen, so könnte die genannte Vorgehensweise an wirtschaftliche oder auch technische Grenzen stossen. Digitale datenkomprimierte Videosignale sollen aber auch von entfernten Videoservern oder -quellen her, ggf. auch grenzüberschreitend, über das öffentliche Netz angeliefert werden können, ohne daß diese frequenzmäßig miteinander bzw. mit einem lokal vorhandenen Takt synchronisiert sein müssen.

In diesem Zusammenhang ist es bereits (aus A. D. Gelman, S. Halfin, W.Willinger: "On Buffer Requirements For Store-And-Forward Video On Demand", Proc. GLOBECOM '91, Seiten 976-980) bekannt, für die Übertragung mittels ATM von einer entfernten Video-Datenbank durch das Fernnetz zu einem Pufferspeicher in der lokalen Kopfstelle eines Teilnehmer-Anschlußnetzes eine burstartige Übertragung mit hoher Übertragungsgeschwindigkeit (bis zu 150 Mbit/s) vorzusehen, die Information in der Kopfstelle zwischenzuspeichern und dann langsam in Echtzeit zum Teilnehmer übertragen. Dies erfordert eine entsprechend hohe Speicherkapazität in der Kopfstelle.
Eine (von D. Deloddere, W.Verbiest, H.Verhille: "Interaktive Video On Demand" in IEEE Communications Magazine, Mai 1994, Seiten 82 - 88 angegebene) Variante dieser Vorgehensweise sieht eine schnelle hochratige Übertragung und Speicherung lediglich der ersten Minuten des Films vor, während der Rest langsam übertragen und in den Pufferspeicher geschrieben wird.
Das zuvor angesprochene Problem einer aufwandsarmen bzw. kostengünstigen Empfangstaktversorgung auch bei einer Vielzahl von (Video-)Signalquellen bzw. bei zwischen (Video-)Signalquellen und Kopfstelle (Connection Unit) liegenden größeren Entfernungen und ggf. Telekomverwaltungsgrenzen bleibt in beiden Fällen offen.

Die Erfindung zeigt demgegenüber einen Weg zu einer vorteilhaften empfangsseitigen Taktversorgung von digital mittels ATM übertragene datenkomprimierte Videosignale abrufenden, teilnehmerseitigen Netzabschlußeinheiten in Faser-/Koaxial-Teilnehmeranschlußnetzen.

Die Erfindung betrifft ein Verfahren zur Übertragung von ATM-Digitalsignalen einer Programmeinheit, insbesondere von digitalen datenkomprimierten Video-Verteilsignalen eines Video-films, von einer entfernten Digitalsignalquelle, insbesondere einem Video-Server, über eine Kopfstelle eines jeweils einer Mehrzahl von teilnehmerseitigen Netzabschlußeinheiten gemeinsamen Lichtwellenleiter- und/oder Koaxialleitungs-Baumnetzes zu wenigstens einer der teilnehmerseitigen Netzabschlußeinheiten, wobei in der Kopfstelle in einem Zwischenspeicher eine Zwischenspeicherung von mit erhöhter Datenrate übertragenen ATM-Digitalsignalen stattfindet; dieses Verfahren ist erfindungsgemäß dadurch gekennzeichnet, daß die Programmeinheit mit einer gegenüber der für die Programmeinheit nominell erforderlichen Datenrate erhöhten, für die ganze Übertragungsdauer beibehaltenen Datenrate von der Digitalsignalquelle zum Zwischenspeicher der Kopfstelle übertragen wird, von dem aus der Datenstrom mit dem für die Programmeinheit nominell erforderlichen, von einer Referenztaktquelle gelieferten Referenztakt zum jeweiligen Teilnehmer weiterübertragen wird, wobei von der Kopfstelle aus der jeweilige Referenztakt gesondert ebenfalls zu der jeweiligen, an das Lichtwellenleiter- und/ oder Koaxialleitungs-Baumnetz angeschlossenen Netzabschlußeinheit übertragen wird, wo damit das aus den empfangenen ATM-Zellen gewonnene Digitalsignal zeitregeneriert wird.

Die Erfindung, die davon ausgeht, daß nur eine begrenzte Anzahl unterschiedlicher nomineller Datenraten im Netz vorgesehen sein wird, bringt mit der Bereitstellung entsprechender Referenztaktquellen in der Kopfstelle eines einer Mehrzahl von teilnehmerseitigen Netzabschlußeinheiten gemeinsamen Lichtwellenleiter- u./o. Koaxialleitungs-Baumnetzes den Vorteil mit sich, daß bei einer Übertragung von digitalen datenkomprimierten Videosignalen im ATM-Format von entfernten Digitalsignalquellen (Video-Servern) über das (ggf.öffentliche) Übertragungsnetz zu der Kopfstelle des Lichtwellenleiter- u./o. Koaxialleitungs-Baumnetzes und weiter zu dessen teilnehmerseitigen Netzabschlußeinheiten gemeinsamen Lichtwellenleiter- u./o. Koaxialleitungs-Baumnetzes zu dessen teilnehmerseitigen Netzabschlußeinheiten keine Signaltakte zwischen Digitalsignalquelle und Kopfstelle übertragen werden müssen und keine Synchronisation zwischen Digitalsignalquelle und Lichtwellenleiter- u./o. Koaxialleitungs-Baumnetz erforderlich ist. Geringfügige Abweichungen der Video(film)geschwindigkeit gegenüber der Geschwindigkeit bei der ursprünglichen Aufzeichnung bzw. Abspeicherung und Codierung sind nicht merkbar.

Weitere Besonderheiten der Erfindung werden aus der nachfolgenden Erläuterung vanhand der Zeichnungen ersichtlich. Dabei sind
in FIG 1 ein Teilnehmeranschlußnetz,
in FIG 2 eine Kopfstelle und
in FIG 3 eine Netzabschlußeinrichtung dargestellt.

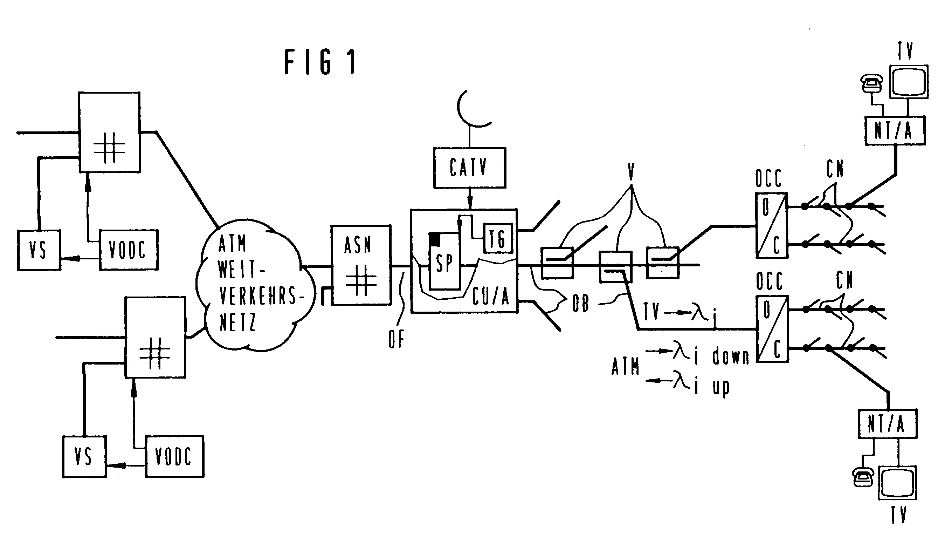

In der Zeichnung FIG 1 ist schematisch ein Beispiel eines Teilnehmeranschlußnetzes dargestellt. Dabei sind im rechten Teil der Zeichnung Koaxialleiternetze CN in der üblichen Baumstruktur angedeutet, wie sie in der Regel bereits verlegt sein werden.
Teilnehmerseitig sind die Koaxialleiter jeweils mit einer Netzabschlußeinrichtung NT/A abgeschlossen, welche ihre Empfangs- und Sendesignale jeweils derart konvertieren möge, daß der Anschluß gängiger Endgeräte möglich ist; eine Netzabschlußeinrichtung NT/A weist z.B. Anschlüsse für Verteilfernsehen bzw. Video on Demand, für herkömmliche Telefonie (POTS) u./o. Schmalband-ISDN oder auch für einen beliebigen Breitband-ISDN-Dienst auf.
Auf der teilnehmerabgewandten Seite sind die Koaxialleiternetze CN jeweils über eine Opto-/Coax-Konvertereinrichtung (Optical/Coax-Converter) OCC an eine optische Anschlußleitung eines über optische Verzweiger (Splitter) V verzweigten Lichtwellenleiternetzes OB angeschlossen, welches die Koaxialleiternetze mit einer vorzugsweise mit einem (ATM-)Multiplexer/ Demultiplexer gebildeten Verbindungseinrichtung (Connection Unit) CU/A verbindet. An eine solche Verbindungseinrichtung CU/A können, wie dies auch in FIG 1 angedeutet ist, mehrere derartige Lichtwellenleiternetze OB angeschlossen sein; in entsprechender Weise können, wie dies ebenfalls in FIG 1 angedeutet ist, an eine Konvertereinrichtung OCC mehrere, z.B. bis zu vier, Koaxialleiter-Subnetze CN angeschlossen sein. Wenn ein Koaxialleiternetz CN den Anschluß von z.B. 100 Teilnehmern ermöglicht, bedient die Konvertereinrichtung OCC z.B. 400 Teilnehmer und die gewissermaßen eine Kopfstelle bildende Verbindungseinrichtung (Connection Unit) CU/A z.B. 2000 bis 4000 Teilnehmer.

Die Übertragung im Teilnehmeranschlußnetz kann auf der Basis von ATM-Zellen (cell-based) mit einem systemspezifischen Overhead vor sich gehen. Dabei kann in der Übertragungsrichtung zum Teilnehmer hin (downstream) die Datenrate mit z.B. 622 Mbit/s grösser sein als die Datenrate in der umgekehrten Übertragungsrichtung (upstream) mit z.B. 155 Mbit/s, wobei aus übertragungstechnischer Sicht die downstream-Übertragung in mehreren Kanälen (z.B. in vier Kanälen ä 155 Mbit/s) vor sich gehen kann.

In dem in FIG 1 skizzierten System werden analoge TV-Verteilsignale (CATV) in die den angeschlossenen Teilnehmern gemeinsame Verbindungseinrichtung (Connection Unit) CU/A eingespeist und zu allen angeschlossenen Teilnehmern hin übertragen. Diese Fernsehsignale können beim Teilnehmer von einem an dessen Netzabschlußeinrichtung NT/A angeschlossenen, in FIG 1 mit TV bezeichneten Fernsehempfänger in üblicher Weise empfangen werden.

Neben den analogen TV-Signalen mögen in dem in FIG 1 skizzierten Telekommunikationssystem der hierfür die Kopfstelle des interaktiven Teilnehmeranschlußnetzes bildenden Verbindungseinrichtung (Connection Unit) CU/A digitale Signale im ATM-Format zugeführt werden. Solche Signale können z.B. digitale Videosignale eines (auch einen ATM-Rückkanal für die Programmwahl durch den TV-Teilnehmer einschliessenden) Videoon-Demand-Dienstes oder auch breitbandige interaktive Datensignale sein, wobei die digitalen Videosignale mittels eines entsprechenden, in FIG 1 nicht gesondert dargestellten Zusatzgerätes (Set-Top-Box) ebenfalls vom Fernsehempfänger TV empfangen werden.

Des weiteren können in dem in FIG 1 skizzierten System in beiden Richtungen schmalbandige ATM-Sprach- und ggf. auch Datensignale übertragen werden, was in FIG 1 durch ein an die Netzabschlußeinrichtung NT/A angeschlossenes Telefon angedeutet wird. Weitere Dienste, welche den Anschluß weiterer Endgeräte an die jeweilige Netzabschlußeinrichtung NT/A erfordern können, sind möglich, ohne daß dies in FIG 1 noch dargestellt werden müsste.

Die ATM-Signale werden über eine ATM-Vermittlungseinrichtung ASN geleitet. Für Video-On-Demand sind dabei Video-Server VS erforderlich, in welchen die abzurufenden Video-Programme (Filme) gespeichert sind, und zwar in der Regel in digitaler und datenkomprimierter Form, beispielsweise nach dem bei ISO-MPEG erarbeiteten MPEG2-Algorithmus mit z.B. 4 Mbit/s. In FIG 1 ist dazu angedeutet, daß die Video-Server VS nicht unmittelbar an die ATM-Vermittlungseinrichtung ASN angeschlossen sind, sondern, fern von der ATM-Vermittlungseinrichtung ASN situiert, mit ihr über weitere ATM-Vermittlungseinrichtungen und dazwischenliegende Übertragungswege eines ATM-Weitverkehrs-Netzes verbindbar sein mögen. Die Video-Server VS mögen jeweils von einem Controller VODC gesteuert werden, welcher von den den Video-on-Demand-Dienst in Anspruch nehmenden Teilnehmern über den jeweiligen Rückkanal kommende Signalisierungsinformationen auswertet und die Programmausgabe aus dem Video-Server VS entsprechend steuert.

Da die an das Weitverkehrsnetz an unterschiedlichen Orten angeschlossenen Videoserver VS untereinander nicht synchronisiert sind, weisen die Videosignale dieser Server leicht differierende Geschwindigkeiten bzw. Taktfrequenzen auf, was in den Videodecodern bzw. Netzabschluß-Einrichtungen NT/A die Verwendung einer für alle empfangenen Filme einheitlichen Taktfrequenz zunächst einmal ausschliesst. Die asynchrone Übertragung durch das ATM-Netz führt andererseits dazu, daß die einzelnen ATM-Zellen in ungleichmäßigen zeitlichen Abständen ankommen, was nach dem "Auspacken" der Zellen einen erheblichen Jitter zur Folge hat, welchen der nachgeschaltete Videodecoder in der Regel nicht verarbeiten kann. Eine für jedes Videosignal individuelle empfangsseitige Wiedergewinnung und Regeneration des Taktes des jeweiligen empfangenen digitalen Videosignals, beispielsweise mittels Phase-locked-Loop-Schaltungen und Glättungsspeichern, wird daher entsprechend aufwendig, wobei sich, wenn eine Netzabschluß-Einrichtung mehrere Endgeräte gleichzeitig bedient, der erforderliche Aufwand entsprechend vervielfacht.

Gemäß der Erfindung sendet nun aber jeder Videoserver VS mit einer Datenrate f_{film} = fₙₒₘ + Δf, die gegenüber der für die jeweilige Programmeinheit, ggf. also den jeweiligen Film, an sich erforderlichen Datenrate fₙₒₘ geringfügig erhöht ist, wobei die Datenrate für jeden Videoserver unterschiedlich sein kann. Es genügt beispielsweise eine etwa um einen Faktor 10⁻⁵ gegenüber dem nominellen Wert erhöhte übertragungsgeschwindigkeit im Netz.
Mit dieser gegenüber der für die Programmeinheit nominell erforderlichen Datenrate geringfügig erhöhten, für die ganze Übertragungsdauer beibehaltenen Datenrate läuft der von der Digitalsignalquelle VS zur der Kopfstelle CU/A übertragene Datenstrom hier in einen Pufferspeicher SP, welcher so bemessen ist, daß er die während der Dauer der Weiterübertragung der Programmeinheit von der lokalen Kopfstelle CU/A zur teilnehmerseitigen Netzabschlußeinrichtung NT/A hin, aus Sicht des Teilnehmers also während der Laufzeit eines Spielfilms von typischerweise 1,5 Stunden, eintreffenden 'überschüssigen' Bits speichern kann, ohne überzulaufen. Bei einem mit 10 Mbit/s codierten Film mit einer Dauer von 2 Stunden laufen in diesen zwei Stunden nur 10·10⁶·10⁻⁵·3600·2 = 720 kbit zu viel an Daten ein.
Das Auslesen des Datenstroms zum jeweiligen Teilnehmer hin geht mit einem lokal in einer Referenztaktquelle TG mit hoher Genauigkeit von beispielsweise 10⁻⁷ erzeugten Referenztakt vor sich. Die Referenztaktfrequenz ist dabei f_{ref} = k·fₙₒₘ, worin k ein rationaler Faktor ist, welcher die Taktfrequenz der digitalen datenkomprimierten Videosequenz (beispielsweise 4 MHz) mit der Übertragungsfrequenz für dieses Signal im ATM-Format verknüpft. Diese ist höher als die Netto-Taktrate, da ja zusätzliche Adreßinformation in den Zellköpfen mitübertragen werden muß. Die Referenztaktfrequenz k·fₙₒₘ wird zugleich gesondert im gesamten Teilnehmeranschlußnetz zu den Netzabschlußeinheiten NT/A hin übertragen, wo sie zur Entjitterung des empfangenen ATM-Signals vor dem bzw. beim "Auspacken" benutzt wird.
Der Speicher SP wird gemeinsam für alle in der Kopfstelle CU/A empfangenen Videosignale verwendet. Er kann um so kleiner sein, je geringer der Unterschied zwischen Ein- und Auslesegeschwindigkeit für die jeweiligen Videosignale ist.

Damit ist für digitale Videosignale von beliebigen, nicht synchronisierten Quellen eine stabile und jitterfreie Abtaktung auf der Teilnehmerseite ermöglicht. Es ist lediglich eine Absprache über die zu verwendende Frequenz fₙₒₘ erforderlich, wobei auch mehrere unterschiedliche Frequenzen fₙₒₘ festgelegt werden können, was aber die Übertragung mehrerer Referenzfrequenzen k·fₙₒₘ im Teilnehmeranschlußnetz erfordert.

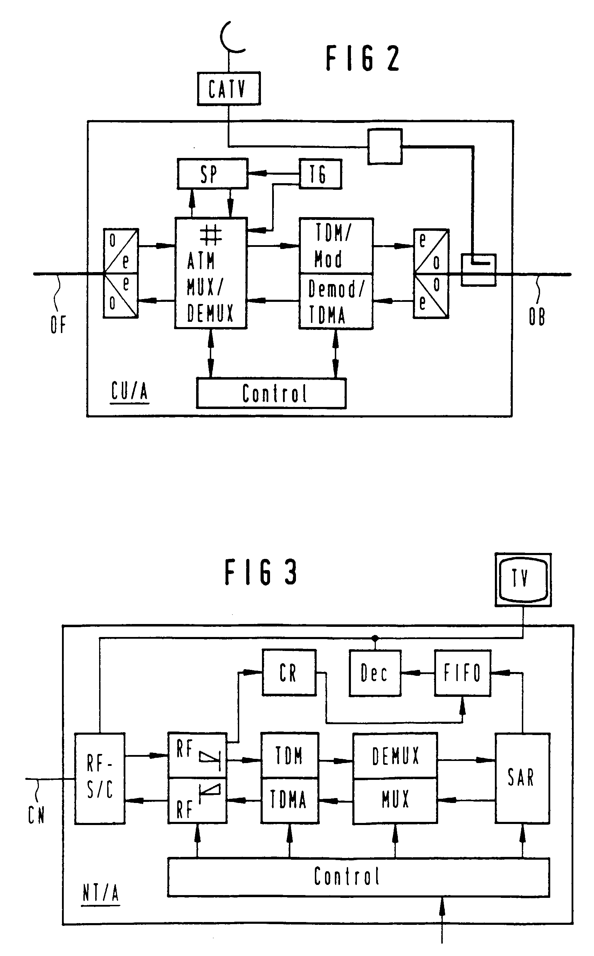

An Hand von FIG 2 und FIG 3 wird die Erfindung noch weiter erläutert.

Aus FIG 2 werden nähere schaltungstechnische Einzelheiten einer eine Kopfstelle bildenden Verbindungseinrichtung (Connection Unit) CU/A ersichtlich, die auf der teilnehmerabgewandten Seite über einen Lichtwellenleiter (Optical Feeder) OF mit einer ATM-Vermittlungseinrichtung (ASN in FIG 1) und auf der teilnehmerzugewandten Seite über ein Lichtwellenleiter-Baumnetz OB (siehe auch in FIG 1) und diesem nachfolgende Koaxialleiter-Baumnetze (CN in FIG 1) mit teilnehmerindividuellen Netzabschlußeinrichtungen (NT/A in FIG 1) verbunden sein möge. Der Lichtwellenleiter OF ist in der Kopfstelle (Verbindungseinrichtung, Connection Unit) CU/A mit einem optoelektrischen Empfänger o/e und elektrooptischen Sender o\e abgeschlossen; das Lichtwellenleiter-Baumnetz OB ist in der Verbindungseinrichtung (Connection Unit) CU/A mit einem optoelektrischen Empfänger e\o und elektrooptischen Sender e/o abgeschlossen. Den elektrooptischen Sender o\e und optoelektrischen Empfänger o/e auf der teilnehmerabgewandten Seite ist ein ATM-Multiplexer/-Demultiplexer (ATM MUX/DEMUX) nachgeschaltet. Dieser sortiert aus dem auf dem Lichtwellenleiter (Optical Feeder) OF ankommenden Downstream-Datenstrom die für die Verbindungseinrichtung (Connection Unit) CU/A bestimmten ATM-Zellen aus und ordnet sie dem jeweiligen Koaxialleiter-Baumnetz CN zu, an welches der empfangende Teilnehmer angeschlossen ist.

In Richtung zu den Teilnehmern durchlaufen die ATM-Signale zunächst den bereits im Zusammenhang mit FIG 1 erläuterten Pufferspeicher SP, aus welchem sie über den ATM-Multiplexer/-Demultiplexer ATM MUX/DEMUX mit dem von einem lokalen Taktgenerator TG hoher Stabilität gelieferten Referenztakt k·fₙₒₘ ausgelesen werden, um im Multiplex zur einer Einheit TDM/Mod weitergeleitet zu werden. In dieser Einheit TDM/MOD werden nach an sich bekannten und daher hier nicht weiter erläuterungsbedürftigen Prinzipien die Aufnahme von für die Verbindungseinrichtung (Connection Unit) CU/A bestimmten ATM-Zellen aus dem downstream über den Lichtwellenleiter OF übertragenen TDM-Zellenstrom und die Abgabe von downstream über den Lichtwellenleiter OB zu übertragenden ATM-Zellen bewirkt, und nach RF(Radio Frequency)-Modulation werden die vom Lichtwellenleiter OF her in downstream-Richtung aufgenommenen ATM-Signale, darunter auch digitale TV-Signale, zum Lichtwellenleiter-Baumnetz OB hin weitergeleitet.

Daneben wird der Referenztakt k·fₙₒₘ zu allen Netzabschluß-Einrichtungen NT/A bzw. Videodecodern hin übertragen, wozu im Ausführungsbeispiel gemäß FIG 2 der Referenztaktgenerator TG ausgangsseitig nicht nur zum Pufferspeicher SP und zum ATM-Multiplexer/-Demultiplexer ATM MUX/DEMUX führt, sondern auch zum RF-Modulator der Kopfstelle (Verbindungseinrichtung, Connection Unit) CU/A , so daß das Referenztaktsignal von der Kopfstelle (Verbindungseinrichtung, Connection Unit) CU/A aus gesondert in Form eines Pilotsignals über das Lichtwellenleiter- u./o. Koaxialleitungs-Baumnetz OB-CN (in FIG 1) zu allen daran angeschlossenen Netzabschlußeinheiten NT/A (in FIG 1) gelangt.

In upstream-Richtung gelangen von den Teilnehmern her über den Lichtwellenleiter OB ankommende, über den Lichtwellenleiter OF zu übertragende ATM-Zellen nach RF(Radio Frequency)-Demodulation und einer TDMA-Prozedur in einer Einheit Demod/ TDMA zum ATM-Multiplexer/-Demultiplexer ATM MUX/DEMUX, der die von den Teilnehmern ankommenden ATM-Zellen zusammenfasst und über den Lichtwellenleiter OF zur ATM-Vermittlungseinrichtung ASN (in FIG 1) und ggf. weiter in das ATM-Weitverkehrs-Netz weiterleitet.

Wie schon in FIG 1 angedeutet ist, können an der Kopfstelle (Verbindungseinrichtung, Connection Unit) CU/A weitere Teilnetze über weitere Fasern OB angeschlossen sein, ohne daß dies in FIG 2 noch im einzelnen dargestellt werden muß.

Das Pilotsignal kann in einem spektral nicht anderweitig genutzten Bereich über die optischen Fasern OB bzw. das koaxiale Baumnetz CN zu den teilnehmerseitigen Abschlußeinrichtungen NT/A übertragen werden, z.B. unterhalb von 10 MHz; aus der Pilotfrequenz kann die betreffende Referenztaktfrequenz direkt abgeleitet werden. Dazu ist die gewählte Pilotfrequenz zweckmäßigerweise auf einfache Weise mit der benötigten Referenztaktfrequenz verknüpft, vorzugsweise in Form ganzzahliger Teile oder Vielfacher dieser Referenztaktfrequenz. In der teilnehmerseitigen Netzabschlußeinrichtung NT/A ist dann auf einfache Weise durch Filterung die Wiederherstellung der Referenztaktfrequenz möglich.
Alternativ dazu ist es auch möglich, eine mit der benötigten Referenztaktfrequenz numerisch nicht verknüpfte Pilotfrequenz festzulegen und diese dann mit der benötigten Referenztaktfrequenz zu modulieren; dies ist mit einer erhöhten Flexibilität bei der spektralen Zuordnung verbunden. Auch hierbei kann in der teilnehmerseitigen Netzabschlußeinrichtung NT/A auf einfache Weise durch Demodulation und Filterung die Referenztaktfrequenz wiedergewonnen werden.

Mit dem so von der Verbindungseinrichtung CU/A (in FIG 1 und FIG 2) aus gesondert über das Lichtwellenleiter- bzw. Koaxialleitungs-Baumnetz OB-CN (in FIG 1) zu allen daran angeschlossenen Netzabschlußeinheiten NT/A übertragenen Signaltakt wird schließlich in der jeweiligen Netzabschlußeinheit NT/A das aus den empfangenen ATM-Zellen gewonnene (Video-) Digitalsignal zeitregeneriert, wie dies auch in FIG 3 angedeutet ist.
Aus FIG 3 werden schematisch für das Verständnis der Erfindung relevante schaltungstechnische Einzelheiten einer Netzabschlußeinrichtung NT/A ersichtlich, die eine Koaxialleitung CN des Koaxialleiter-Baumnetzes (CN in FIG 1) abschliessen möge. Den koaxialleitungsseitigen Abschluß bildet dabei ein RF(Radio Frequency)-Separator/-Combiner RF-S/C, an den ein RF(Radio Frequency)-Modulator/-Demodulator angeschlossen ist. Daran schliessen sich an eine Einrichtung TDM/TDMA an, die nach an sich bekannten und daher hier nicht weiter erläuterungsbedürftigen Prinzipien die Aufnahme von für die Netzabschlußeinrichtung NT/A bestimmten ATM-Zellen aus dem downstream übertragenen TDM-Zellenstrom und die Abgabe von upstream in einem TDMA-Verfahren zu übertragenden ATM-Zellen bewirken möge, und ein (De-)Multiplexer MUX/DEMUX sowie eine Einrichtung SAR zur Zellenbildung (Segmentation) und Zellenauflösung (Reassembling), was hier jedoch nicht weiter verfolgt werden soll, da dies zum Verständnis der Erfindung nicht erforderlich ist.
Gemäß FIG 3 ist nun an den RF-Demodulator eine Einrichtung CR zur Taktwiederherstellung (Clock Recovery) angeschlossen, die in der oben erwähnten Weise den (die) zum Empfang von (TV-) Digitalsignalen benötigten Signaltak(e) wiederherstellen möge, mit dem (denen) dann das aus den empfangenen ATM-Zellen gewonnene (Video-)Digitalsignal zeitregeneriert wird. Dies kann, wie dies auch in FIG 3 angedeutet ist, mit Hilfe eines FIFO(First In First Out)-Speichers geschehen, in den das aus den empfangenen ATM-Zellen gewonnene und somit zunächst noch taktverjitterte (Video-)Digitalsignal von der Segmentation/Reassembling-Einrichtung SAR her im verjitterten Takt eingelesen wird und aus dem dieses (Video-)Digitalsignal mit dem von der Taktwiederherstellungseinrichtung CR abgegebenen zeitregenerierten Takt wieder ausgelesen wird. Das so zeittaktregenerierte Video-Digitalsignal gelangt dann zu einem Videodecoder Dec, mit dem schließlich der Video-Empfänger TV des betreffenden Teilnehmers verbunden ist. Analoge CATV-Verteilsignale werden vom RF-Separator/-Combiner RF-S/C her direkt dem Video-Empfänger TV zugeführt.
Geringfügige Abweichungen der Filmgeschwindigkeit gegenüber der Geschwindigkeit bei der ursprünglichen Aufzeichnung bzw. Abspeicherung und Codierung sind infolge der sehr geringen Frequenzabweichung nicht merkbar.

Abschliessend sei noch bemerkt, daß die im vorstehenden am Beispiel eines in FIG 1 skizzierten Teilnehmeranschlußnetzes mit Koaxialleiternetzen CN erläuterte Erfindung nicht an solche Koaxialleiter gebunden ist, vielmehr auch in Zusammenhang mit anderen Übertragungsmedien wie Lichtwellenleitern, drahtlosen Übertragungswegen oder symmetrischen Kupferleitungen Anwendung finden kann, ohne daß dies hier noch weiterer Erläuterungen bedarf.

## Patentansprüche

1. Verfahren zur Übertragung von ATM-Digitalsignalen einer Programmeinheit, insbesondere von digitalen datenkomprimierten Video-Verteilsignalen, von einer entfernten Digitalsignalquelle (VS), insbesondere einem Video-Server, über eine Kopfstelle (CU/A) eines jeweils einer Mehrzahl von teilnehmerseitigen Netzabschlußeinheiten (NT/A) gemeinsamen Lichtwellenleiter- und/oder Koaxialleitungs-Baumnetzes (OB-CN) zu wenigstens einer der teilnehmerseitigen Netzabschlußeinheiten (NT/A), wobei in der Kopfstelle (CU/A) in einem Zwischenspeicher (SP) eine Zwischenspeicherung von mit erhöhter Datenrate übertragenen ATM-Digitalsignalen stattfindet,
**dadurch gekennzeichnet,**
daß die Programmeinheit mit einer gegenüber der für die Programmeinheit nominell erforderlichen Datenrate erhöhten, für die ganze Übertragungsdauer beibehaltenen Datenrate von der Digitalsignalquelle (VS) zum Zwischenspeicher (SP) der Kopfstelle (CU/A) übertragen wird, von dem aus der Datenstrom mit dem für die Programmeinheit nominell erforderlichen, von einer Referenztaktquelle (TG) gelieferten Referenztakt zum jeweiligen Teilnehmer (NT/A) weiterübertragen wird, wobei von der Kopfstelle (CU/A) aus der jeweilige Referenztakt gesondert ebenfalls zu der jeweiligen, an das Lichtwellenleiter- und/ oder Koaxialleitungs-Baumnetz (OB-CN) angeschlossenen Netzabschlußeinheit (NT/A) übertragen wird, wo damit das aus den empfangenen ATM-Zellen gewonnene Digitalsignal zeitregeneriert wird.

2. Verfahren nach Anspruch 1,
**dadurch gekennzeichnet,**
daß der (die) Referenztakt(e) von der Kopfstelle (CU/A) aus in Form von Pilotsignalen über das Lichtwellenleiter- und/oder Koaxialleitungs-Baumnetz (OB-CN) zu allen daran angeschlossenen Netzabschlußeinheiten (NT/A) übertragen wird (werden).

3. Verfahren nach Anspruch 2,
**dadurch gekennzeichnet,**
daß jede Referenztaktfrequenz direkt von einer in einem spektral nicht anderweitig genutzten Bereich über die optischen Fasern (OB) bzw. das koaxiale Baumnetz (CN) zu den teilnehmerseitigen Abschlußeinrichtungen (NT/A) übertragenen Pilotfrequenz abgeleitet wird.

4. Verfahren nach Anspruch 3,
**dadurch gekennzeichnet,**
daß die Pilotfrequenzen mit den benötigten Referenztaktfrequenzen in Form deren ganzzahliger Teile oder Vielfache verknüpft sind.

5. Verfahren nach Anspruch 2,
**dadurch gekennzeichnet,**
daß mit den Referenztaktfrequenzen numerisch nicht verknüpfte Pilotfrequenzen festgelegt und diese Träger mit den Referenztaktfrequenzen moduliert werden.

## Claims

1. Method for transmission of ATM digital signals from a program unit, in particular for the transmission of digital compressed-data video distribution signals, from a remote digital signal source (VS), in particular a video server, via a head station (CU/A) of an optical conductor and/or coaxial line tree-type network (OB-CN), which is in each case common to a plurality of subscriber-end network termination units (NT/A), to at least one of said subscriber-end network termination units (NT/A), with ATM digital signals which are transmitted at an increased data rate being buffer-stored in a buffer store (SP) in the head station (CU/A),
characterized
in that the program unit is transmitted at a data rate which is increased in comparison with the data rate which is nominally required for the program unit and is maintained for the entire transmission duration, from the digital signal source (VS) to the buffer store (SP) in the head station (CU/A), from which the data stream is transmitted onwards to the respective subscriber (NT/A) using the reference clock which is nominally required for the program unit and is supplied from a reference clock source (TG), with the respective reference clock being transmitted from the head station (CU/A), likewise separately, to the respective network termination unit (NT/A) which is connected to the optical conductor and/or coaxial line tree-type network (OB-CN), where the digital signal obtained from the received ATM cells is thus time-regenerated.

2. Method according to Claim 1,
characterized
in that the reference clock or clocks is or are transmitted from the head station (CU/A) in the form of pilot signals and via the optical conductor and/or coaxial line tree-type network (OB-CN) to all the network termination units (NT/A) which are connected to it.

3. Method according to Claim 2,
characterized
in that each reference clock frequency is derived directly from a pilot frequency which is transmitted in a spectral band that is not used for any other purpose, via the optical fibres (OB) or the coaxial tree-type network (CN), to the subscriber-end termination devices (NT/A).

4. Method according to Claim 3,
characterized
in that the pilot frequencies are linked to the required reference clock frequencies in the form of their integer parts or multiples.

5. Method according to Claim 2,
characterized
in that pilot frequencies are defined which are not numerically linked to the reference clock frequencies, and these carriers are modulated with the reference clock frequencies.

## Revendications

1. Procédé de transmission de signaux numériques MTA d'une unité de programmes, en particulier de signaux de distribution vidéo, numériques et à données comprimées, à partir d'une source éloignée (VS) de signaux numériques, en particulier à partir d'un serveur vidéo, par l'intermédiaire d'une tête de ligne (CU/A) d'un réseau arboriforme (OB - CN) de guides d'ondes lumineuses etlou de câbles coaxiaux, commun à une pluralité d'unités de terminaison du réseau (NT/A) côté utilisateurs, vers au moins une des unités de terminaison du réseau (NT/A) côté utilisateurs, une mémorisation temporaire de signaux numériques MTA transmis avec un débit plus élevé étant effectuée dans une mémoire tampon (SP) dans la tête de ligne (CU/A),
**caractérisé par le fait**
que l'unité de programme est transmise avec un débit, qui est supérieur au débit nominalement nécessaire pour l'unité de programme et qui est maintenu pendant toute la durée de la transmission, entre la source numérique (VS) du signal et la mémoire tampon (SP) de la tête de ligne (CU/A), à partir de laquelle le flux de données est retransmis à l'utilisateur respectif (NT/A) avec la base de temps de référence nominalement nécessaire pour l'unité de programme et fournie par une source de base de temps de référence (TG), la base de temps de référence respective étant également transmise séparément à partir de la tête de ligne (CUIA) à l'unité respective de terminaison de réseau (NT/A), raccordée sur le réseau arboriforme (OB - CN) de guides d'ondes lumineuses etlou de câbles coaxiaux, et dans laquelle le signal numérique tiré des cellules MTA reçues est ainsi régénéré avec une base de temps de synchronisation.

2. Procédé selon la revendication 1
**caractérisé par le fait**
que la ou les bases de temps de référence est ou sont transmises à partir de la tête de ligne (CU/A), sous forme de signaux pilotes, par l'intermédiaire du réseau arboriforme (OB - CN) de guides d'ondes lumineuses etlou de câbles coaxiaux, vers toutes les unités de terminaison de réseau (NT/A).

3. Procédé selon la revendication 2
**caractérisé par le fait**
que chaque fréquence de base de temps de référence est tirée directement d'une fréquence pilote transmise dans une plage spectralement non utilisée par ailleurs, par l'intermédiaire des fibres optiques (OB) etlou du réseau arboriforme coaxial (CN) vers les dispositifs de terminaison (NT/A) côté utilisateurs.

4. Procédé selon la revendication 3
**caractérisé par le fait**
que les fréquences pilotes sont combinées avec les fréquences de base de temps de référence nécessaires, sous forme de ses sous-multiples ou de ses multiples entiers.

5. Procédé selon la revendication 2
**caractérisé par le fait**
que des fréquences pilotes non combinées numériquement avec les fréquences de base de temps de référence sont définies et que ces porteurs sont modulés avec les fréquences de base de temps de référence.
